Europäisches Patentamt

European Patent Office

Office européen des brevets

(11) Publication number: **0 181 487**
**A1**

(12) **EUROPEAN PATENT APPLICATION**

(21) Application number: 85112664.9

(22) Date of filing: 07.10.85

(51) Int. Cl.⁴: **B 60 T 13/24**

(30) Priority: 05.11.84 US 668437

(43) Date of publication of application:
21.05.86 Bulletin 86/21

(84) Designated Contracting States:
DE FR GB IT

(71) Applicant: ALLIED CORPORATION
Columbia Road and Park Avenue P.O. Box 2245R (Law Dept.)
Morristown New Jersey 07960(US)

(72) Inventor: Hendrickson, Richard Troy ALLIED
CORPORATION
Law Dep. (Patent) 401 Bendix Drive P. O. Box 4001
South Bend Indiana 46634(US)

(74) Representative: Brullé, Jean et al,
Service Brevets Bendix 44, rue François 1er
F-75008 Paris(FR)

(54) Compact power brake actuation assembly.

(57) The compact power brake actuation assembly (10) comprises a power-assist apparatus (12) coupled to the front of a master cylinder (14) mounted on a stationary wall (100), the master cylinder housing (41) having an extension (147) receiving slidably therein a three-way valve (88). The three-way valve (88) is coupled to a linkage (34) having a through passage (36) and connected to the movable wall (26) of the power-assist apparatus (12). The master cylinder housing (41) includes a passage (49) communicating with the bore (47) of an extension (42) sealingly and slidably received within an opening (40) of the movable wall (26). The compact power brake actuation assembly (10) provides a substantial reduction in overall length and weight and eliminates many manufacturing tolerances and lost travel present in prior assemblies.

./...

EP 0 181 487 A1

FIG. 1

# COMPACT POWER BRAKE ACTUATION ASSEMBLY

This invention relates to a compact power brake actuation assembly having a power-assist apparatus attached to a master cylinder housing fixed to a stationary member.

Brake actuation assemblies usually have the master cylinder mounted on the front side of the booster housing, which requires that the booster housing be manufactured of strong, heavy material in order to support the weight of the master cylinder. Concern with respect to the weight of automotive components has led to the development of light weight, vacuum brake boosters. Such brake boosters are attached to the fire wall of the vehicle and during some brake applications, actuation forces transmitted to the booster can cause deformation in the brake booster structure. The brake booster usually has a centrally positioned three-way valve that occupies an area which could be more efficiently utilized for the pressure differential displacement of the movable wall in the booster. Vacuum brake boosters typically utilize air from the engine compartment, such air not being clean and contaminating the brake booster components. Some power-brake actuation assemblies comprise what is known as a puller vacuum brake actuation assembly, wherein the booster housing is mounted at one end of the master cylinder and the other end of the master cylinder is mounted to the firewall, the brake pedal operatively coupled to a rod that extends through the master cylinder and booster housing. Such booster assemblies typically suffer from the problems described above, that is, large size and heavy, deformation of the components of the booster assembly, utilization of contaminated air from the engine compartment, in addition to the problem of accumulated manufacturing tolerances. Many of the manufacturing tolerances have been effectively eliminated by a puller vacuum brake actuation assembly described in copending and commonly assigned U. S. Patent Application Serial No. 437,940 filed November 1, 1982 and entitled "BRAKE ACTUATION ASSEMBLY", and other improvements effected by copending U.S. Patent Application No. 560,684 filed December 12, 1983 and entitled "BRAKE PRESSURE GENERATOR SYSTEM".

The present invention comprises a brake actuation assembly having one end of a master cylinder attached to the back of a power-assist apparatus to form a part of the apparatus housing and the other end of the master cylinder mounted to a stationary wall of the vehicle. The master cylinder housing extends through the stationary wall of the vehicle to define an end chamber receiving therein the hub assembly of a three-way valve. The hub assembly is slidably received within the end chamber and the three-way valve connected to a linkage extending through the master cylinder and attached to the movable wall of the power-assist apparatus. The linkage comprises a hollow tube providing means for communicating vacuum or atmospheric pressure to one side of the movable wall in order to effect displacement of the movable wall. The master cylinder comprises a housing having a through passage communicating with an extension that extends into the power-assist apparatus and through an opening in the movable wall, the movable wall having a seal for sealingly and slidingly engaging the extension during movement therealong. The extension is disposed parallel to the linkage means, and provides stabilization of the movable wall.

One way of carrying out the invention is described in detail below with reference to the drawing which illustrates one embodiment of the invention in which:

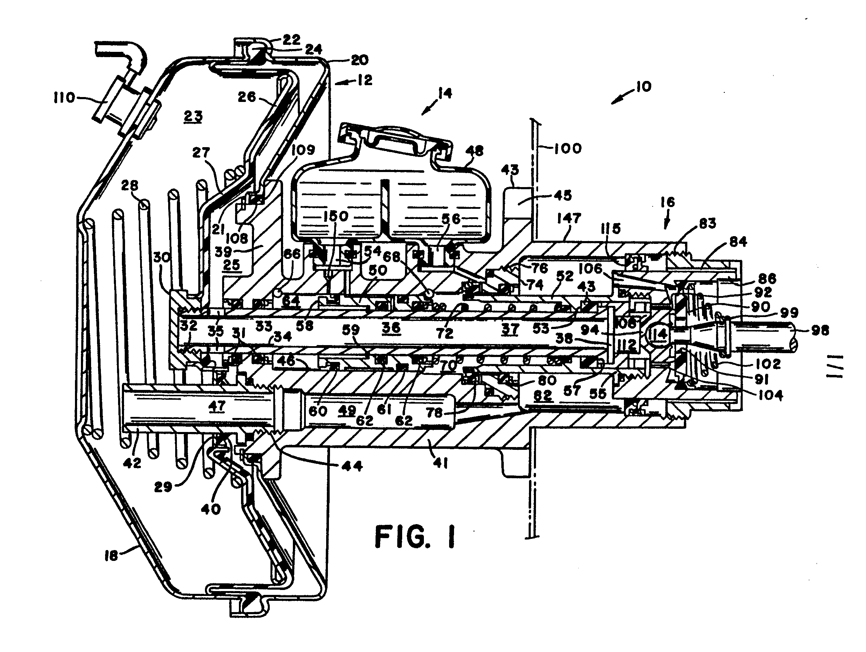

Figure 1 is a section view of the compact power brake actuation assembly of the present invention.

Referring to Figure 1, the compact power brake actuation assembly is referenced generally by numeral 10. Actuation assembly 10 includes three basic components comprising power-assist apparatus 12, master cylinder 14, and three-way valve assembly 16. The power-assist apparatus 12 comprises a front shell 18 connected to a rear shell 20 at rim 22. Rim 22 captures a bead 24 of flexible movable wall 26 disposed within power-assist apparatus 12. The movable wall 26 is biased by spring 28 at central portion 27 which includes a cap 30 threadedly receiving a threaded end 32 of the linkage 34. Linkage 34 has a through opening 36 which provides communication between end opening 38 and slot openings 35 located adjacent the threaded end 32. Movable wall 26 includes an opening 29 with a seal 40 which sealingly and slidingly engages a master cylinder housing extension 42. The extension 42 is threadedly received at opening 44 of the master cylinder housing 41. Flange 39 extends from housing 41 and provides a seat 108 for seal 109 and the lip 21 of rear shell 20. Master cylinder housing 41 includes a bore 46 extending therethrough and providing a passage for the linkage 34 and pistons 50 and 52. Linkage 34 is slidably received in housing opening 33 having seals 31 located on both sides thereof. Located below and parallel to bore 46 is passage 49 which provides communication between bore 47 of extension 42 and chamber 82 at the other end of housing 41. Reservoir 48 is disposed atop master cylinder housing 41 and provides fluid to bore 46 through the inlets 54 and 56. A secondary piston end 58 is engaged by snap ring 59 of linkage 34, secondary piston end 58 having cup seal 60 and seal 61 engaging the bore 46 and seals 62 sealingly and slidingly engaging the linkage 34. Housing 41, linkage 34, bore 46, and secondary piston end 58 define secondary chamber 64 which communicates with brake line outlet 66. Brake line outlet 68 is disposed within primary chamber 70 defined by secondary piston 50, linkage 34, primary piston 52 and bore 46. Primary piston 52 engages a spring 72 which engages an end of secondary piston 50. A threaded member 74 is received within threaded opening 76 of master cylinder housing 41, in order to enclose the bore 46 and position cup seal 78 which engages the primary piston and provides a passage for fluid through fluid inlet 56. A seal 80 also engages the primary piston to provide for leak-proof movement of the primary piston through member 74.

Master cylinder housing 41 includes lateral tabs 43 which have openings 45 for receiving bolts or other attachment means for securing housing 41 to the stationary wall 100. Housing 41 extends through wall 100 by means of extension 147 which defines the chamber 82. Extension 147 has a threaded end 83 receiving therein a threaded tube or sleeve assembly 84. Slidably received within sleeve assembly 84 and seal 115 is a hub assembly 86 having therein a three-way valve assembly 88. The three-way valve assembly 88 includes a flexible valve member 90 with central opening 91, plunger 94 receiving head 114 of actuating rod 98, spring 102 abutting neck 99, first seat 104, second seat 92, passage 106, opening 108, cavity 112, and reaction member 43 abutting a shoulder 53 of primary piston 52 and a shoulder 57 of linkage 34. Primary piston end 55 is threadedly received by hub assembly 86. Three-way valve assembly 88 operates in the conventional and well-known manner. The threaded engagement between threaded end 83 and sleeve assembly 84 provides a means for adjusting the at-rest position of the various components coupled directly or indirectly to sleeve assembly 84 and thereby permitting the linkage 34 to be moved so that cup seal 60 is properly positioned relative to compensation passage 150.

Figure 1 illustrates brake actuation assembly 10 in an at-rest position. Vacuum pressure is present in chambers 23 and 25 of apparatus 12, atmosphere having been evacuated by means of check valve 110, chamber 23, bore 47, passage 49, chamber 82, passage 106, open second seat 104, opening 108, cavity 112, end opening 38, through opening 36, slot openings 35, and chamber 25. When the brakes of the vehicle are to be actuated, the operator presses the brake pedal (not shown) which displaces the operatively coupled actuation rod 98. Actuation rod 98 is coupled with linkage 34 at end 37 by means of plunger 94 and reaction member 43, and movement of rod 98 effecting displacement of primary piston 52, spring 72, and secondary piston 50. Flexible valve member 90 is drawn inwardly toward chamber 82 because of the vacuum pressure present therein, and thus moves axially with plunger 94 to close first seat 104 just before second seat 92 is opened. The opening of second seat 92 enables atmospheric pressure from the passenger compartment to pass through central opening 91 and open seat 92 to cavity 112, end opening 38, opening 36, slot openings 35, and chamber 25. Closed first seat 104 maintains vacuum pressure in chambers 82 and 23. The provision of atmospheric pressure to rear chamber 25 effects a pressure differential between chambers 23 and 25 and results in displacement of movable wall 26. Movable wall 26 moves toward the front shell 18 with seal 40 sealingly and slidingly moving along the extension 42. The pressure differential displacement of movable wall 26 provides a power-assisted displacement of linkage 34 and operatively coupled primary piston 52 which biases spring 72 to displace secondary piston 50 and compress the brake fluid within the primary and secondary chambers 70 and 64, the compressed fluid being communicated through respective outlets 68 and 66 to the brake assemblies. During displacement of linkage 34, the hub assembly 86 slides along the sleeve assembly 84 with seal 115 preventing atmospheric pressure from entering into chamber 82. When the brakes of the vehicle are to be released, the operator releases pressure on the brake pedal so that plunger 94 and actuating rod 98 are returned toward the rest position by means of spring 102 biasing rod 98 to effect the closing of valve seat 92 and opening of valve seat 104 so that atmospheric pressure is evacuated from chamber 25 which allows return spring 28 to bias the movable wall toward the rest position. Atmospheric pressure is evacuated from chamber 25 by means of bore 47, passage 49, chamber 82, passage 106, open seat 104, opening 108, cavity 112, end opening 38, through opening 36, and slots 35. Snap ring 59 ensures that secondary piston 50 returns with linkage 34 to the at-rest position illustrated. It should be clearly understood that the actuation assembly 10 may utilize compressed air, instead of vacuum pressure, to effect a pressure differential across the wall 26.

The compact power brake actuation assembly of the present invention provides significant advantages over prior assemblies. When the three-way valve is positioned at the center of the booster housing and in front of the master cylinder housing, the three-way valve occupies a central area which can be more effectively utilized as a force application area for the pressure differential exerting a force on the movable wall. Placing the three-way valve assembly outside the booster housing enables a smaller diameter movable wall to be utilized while still providing essentially the same actuation forces on the movable wall. Thus, there is a more efficient use of the pressure differential forces available for application to the movable wall. The present invention enables clean air from the passenger compartment to be utilized for effecting the pressure differential in the booster housing, rather than using engine compartment air which introduces contaminants to the brake actuation assembly. A solid linkage rod extending from the actuation rod through the master cylinder housing and into the booster housing is eliminated. As a result, a hollow linkage is utilized and provides a savings in weight. Because the present invention provides for a more direct actuation of the three-way valve and permits an integrated master cylinder-vacuum booster housing, much of the lost travel which results from the buildup of manufacturing tolerances has been eliminated. There is an improved pedal feel for the operator, in that the brake pedal would be depressed a much shorter distance in order to effect actuation of the brakes. The master cylinder housing has an internal passage which provides for evacuation of atmospheric pressure from the vacuum booster housing, with the extension 42 and linkage 34 stabilizing the movable wall during and after operation. The three-way valve is disposed on the passenger side of the firewall where the valve is more directly actuated, with the master cylinder disposed between the booster housing and three-way valve. This enables a significant reduction in the axial length of the entire power brake actuation assembly because the master cylinder housing is disposed behind the booster housing which is angled backwardly toward the firewall and over the master cylinder housing, resulting in a substantial saving in space in the engine compartment. A significant advantage is that there are no structural or mounting loads imposed on the shells of the the booster housing. The booster housing is mounted to the front of the master cylinder housing which is secured to the firewall, and actuation forces are applied directly to the linkage which is coupled to the movable wall. Thus, the compact power brake actuation assembly of the present invention provides a unique, simplified, and easily manufacturable compact power brake actuation assembly which may be utilized in a wide variety of applications.

Although this invention has been described in connection with the illustrated embodiment, it will be obvious to those skilled in the art that various changes may be made in the form, structure, and arrangement of parts without departing from the invention.

0181487

-8-

COMPACT POWER BRAKE ACTUATION ASSEMBLY

CLAIMS:

1. In a brake actuation assembly (10) having a master cylinder (14) and a power-assist apparatus (12), said power-assist apparatus (12) having a spring (28) that urges a wall (26) toward a rest position and a valve (16) responsive to an input signal for controlling the development of a pressure differential that acts on said wall (26) to create an output force that displaces the wall (26) from the rest position toward an operational position, said master cylinder (14) including a housing (41) having a bore (46) and passages for connecting (54, 56) said bore (46) with a fluid reservoir (48) and a pressure responsive device, piston means (50, 52) located in said bore (46), linkage means (34) for connecting said wall (26) with said piston means (50, 52) and moving said piston means (50, 52) toward said power-assist apparatus (12) on movement of said wall (26) from said rest position to pressurize fluid in the bore (46) and operate said fluid pressure responsive device, characterized in that the actuation assembly (10) comprises the master cylinder (14) being positioned between said power-assist apparatus (12) and the valve (16); the valve (16) being connected to an end of said linkage means (34) opposite an end (32) connected with said movable wall (26), the linkage means (34) passing through the bore (46) of said master cylinder housing (41) and having a through opening (36) for communicating pressure from said valve (16) to said power-assist apparatus (12), said housing (41) having a passageway (49) disposed therein providing communication between said power-assist apparatus (12) and valve (16), the passageway (49) including a passage extension (42) extending from said housing (41) and through a corresponding opening (29) in said wall (26), the wall (26) having seal means (40) for sealingly and slidably engaging said extension (42).

2. The brake actuation assembly (10) in accordance with claim 1, characterized in that the through opening (36) of said linkage means (34) provides an opening (38) at one end for receiving atmospheric pressure from said valve (16) and an opening (35) at the other end (32) for providing atmospheric pressure to said power-assist apparatus (12).

3. The brake actuation assembly (10) in accordance with claim 1, characterized in that said linkage means (34) includes a snap ring (59) for engaging a portion of said piston means (50) so that said piston means (50) moves with said linkage means (50).

4. The brake actuation assembly (10) in accordance with claim 1, characterized in that said passage extension (42) and passageway (49) are disposed in parallel relationship with said linkage means (34), the linkage means (34) connection with said wall (26) and the engagement of the wall (26) with the passage extension (42) stabilizing the wall (26) during displacement thereof.

5. The brake actuation assembly (10) in accordance with claim 1, characterized in that said valve (16) comprises a three-way valve mechanism (88) actuated by an actuation rod (98) coupled thereto.

6. The brake actuation assembly (10) in accordance with claim 5, characterized in that said housing (41) is coupled to a stationary member (100), the housing (41) including an end chamber (82) in which is received the three-way valve mechanism (88) which is displaceable within said end chamber (82).

7. The brake actuation assembly (10) in accordance with claim 6, characterized in that the housing (41) comprises an integral member (41) fixedly attached to said power-assist apparatus (12) and stationary member (100), and an end member (84) threadedly received by the housing (41) to enclose the end chamber (82), the end member (84) providing slideable engagement with said three-way valve mechanism (88) which is displaced from a rest position by said actuation rod (98), and said end member adjustable (84) to displace the three-way valve mechanism (88) and operatively connected linkage means (34) and piston means (50, 52).

8. The brake actuation assembly (10) in accordance with claim 6, characterized in that said three-way valve mechanism (88) encloses an end of said end chamber (82) in order to maintain vacuum pressure within the end chamber (82).

9. The brake actuation assembly (10) in accordance with claim 1, characterized in that said power-assist apparatus (12) includes a check valve (110) for effecting vacuum within said power-assist apparatus (12), and when said wall (26) is in the rest position vacuum being communicated to both sides of said wall (26) by means of said passage extension (42), passageway (49), and said valve (16) which communicates with said through opening (36) in the linkage means (34).

10. The brake actuation assembly (10) in accordance with claim 1, characterized in that the actuation assembly (10) comprises an enlarged diameter section (39) of said master cylinder housing (41), said enlarged diameter section (39) attached to and forming a portion of a wall of said power-assist apparatus (12).

11. The brake actuation assembly (10) in accordance with claim 10, characterized in that said enlarged diameter section (39) forming a portion of a wall defines partially a chamber (25) of said power-assist apparatus (12).

1/1

**FIG. I**

European Patent
Office

**EUROPEAN SEARCH REPORT**

**0181487**
Application number

EP   85 11 2664

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 112 750  (DBA) <br> * Whole document * | 1-8 | B 60 T   13/24 |
| A | PATENTS ABSTRACTS OF JAPAN, vol. 8, Nr. 182(M-319)[1619], August 22, 1984; & JP - A - 59 75856 (JIDOSHA KIKI K.K.) 28-04-1984 | 1 | |
| A | FR-A-2 240 850  (BOSCH) <br> * Figure 1 * | 2 | |
| A | US-A-4 182 220  (BENDIX) <br> * Figure 1 * | 3 | |
| A | DE-A-2 340 892  (BOSCH) <br> * Page 4, lines 5-23; figures * | 2,4 | TECHNICAL FIELDS SEARCHED (Int Cl.4) |
| A | US-A-4 475 444  (BENDIX) <br> * Whole document * | 5-8 | B 60 T |
| A | GB-A-1 340 048  (GIRLING) <br> * Page 2, lines 45-51; figure 1 * | 7 | |
| A | US-A-3 967 536  (BENDIX) <br> * Column 4, lines 12-22; figure 2 * | 9 | |
| A | DE-A-2 639 921  (TEVES) <br> * Whole document * | 9 | |

--- -/-

The present search report has been drawn up for all claims

| Place of search | Date of completion of the search | Examiner |
|---|---|---|
| THE HAGUE | 04-02-1986 | BLURTON M.D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent Office

**EUROPEAN SEARCH REPORT**

## DOCUMENTS CONSIDERED TO BE RELEVANT

Page 2

| Category | Citation of document with indication. where appropriate, of relevant passages | Relevant to claim | CLASSIFICATION OF THE APPLICATION (Int Cl.4) |
|---|---|---|---|
| A | GB-A-2 074 268 (TEVES) <br> * Page 4, lines 12-16; figure 2 * | 10,11 | |
| A | EP-A-0 062 268 (TEVES) | | |
| A | FR-A-2 476 575 (FAG) | | |
| A,D | EP-A-0 110 740 (BENDIX) | | |

TECHNICAL FIELDS SEARCHED (Int. Cl.4)

The present search report has been drawn up for all claims

| Place of search | Date of completion of the search | Examiner |
|---|---|---|
| THE HAGUE | 04-02-1986 | BLURTON M.D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82